# EUROPÄISCHE PATENTSCHRIFT

(11) **EP 1 240 446 B1**
(45) Veröffentlichungstag und Bekanntmachung des Hinweises auf die Patenterteilung: **17.12.2003**
(21) Anmeldenummer: 00981341.1
(22) Anmeldetag: 06.12.2000
(51) Int. Cl.: F16H 59/02, F16H 61/12

(54) **STEUEREINRICHTUNG FÜR EIN AUTOMATISCH UND MANUELL SCHALTBARES SCHALTGETRIEBE IN EINEM KRAFTFAHRZEUG**
CONTROL DEVICE FOR AN AUTOMATICALLY AND MANUALLY SHIFTABLE GEARBOX IN A MOTOR VEHICLE
UNITE DE COMMANDE POUR UNE BOITE DE VITESSES POUVANT ETRE UTILISEE DE MANIERE AUTOMATIQUE ET MANUELLE, INSTALLEE DANS UN VEHICULE AUTOMOBILE

(30) Priorität: 10.12.1999 DE 19959616
(43) Veröffentlichungstag der Anmeldung: 18.09.2002
(73) Patentinhaber: Volkswagen Aktiengesellschaft, 38436 Wolfsburg (DE)
(72) Erfinder: ALTENKIRCH, Manfred, 38553 Wasbüttel (DE); OTT, Bernhard, 38162 Cremlingen (DE); LÖHNER, Andreas, 38154 Königslutter (DE)
(74) Vertreter: Hübsch, Dirk, Dipl.-Ing.
(86) Internationale Anmeldenummer: EP0012241
(87) Internationale Veröffentlichungsnummer: WO01042686

(56) Entgegenhaltungen:
- EP-A- 0 895 003
- EP-A- 0 899 479
- DE-A- 4 135 362
- DE-A- 19 810 479
- DE-A- 19 905 627
- US-A- 5 406 860
- US-A- 5 584 209

## Beschreibung

Die Erfindung betrifft eine Steuereinrichtung für ein automatisch und manuell schaltbares Schaltgetriebe in einem Kraftfahrzeug, mit einem Wählhebel zur Einstellung zumindest der Positionen Vorwärts D, Neutral N, Rückwärts R, Parksperre P und einer Position M für manuelle Schaltungen, wobei in der Position M für manuelle Schaltungen ein erster und zweiter Tipschalter betätigbar ist, wobei zur Steuerung des Getriebes über Positionsgeber und Steuerleitungen an ein Steuergerät entsprechende Signale zum manuellen Herauf- und Herunterschalten der Getriebeübersetzungen abgegeben werden und wobei ein Ausfall der Positionsgeber und/oder der dem Positionsgebem zugeordneten Steuerleitungen ermittelbar ist.

Die bisher im Stand der Technik bekannten Wählhebel haben zur Gangbegrenzung bspw. für Bergabfahrten die Schalterstellungen "4", "3", "2" bzw. "3 bis 1", die das Getriebe in den entsprechenden Gang schalten. Bei den neueren im Stand der Technik bekannten Wählhebeln entfällt teilweise diese Gangbegrenzung, wenn nämlich das Schaltgetriebe als automatisiertes Schaltgetriebe ausgeführt ist und eine "Tip-Schaltbetätigung" verwendet wird. Hier kann der Fahrer manuell über die Tipgasse die Gänge herunterschalten und so bspw. bei einer Bergabfahrt die nötige Motorbremswirkung erreichen. Die "Tip-Schaltung" schaltet bei Betätigung der entsprechenden Tip-Taste bzw. des entsprechenden Tip-Schalters ein Massepotential an einen Eingang des Steuergerätes. Hierbei handelt es sich bei den Tipschaltem der "Tip-Schaltung" im allgemeinem um Hallelemente, die in der Schaltabdeckung angeordnet sind und durch einen Magneten betätigt bzw. ausgelöst werden. Problematisch ist, daß diese Hallschalter derzeit nicht optimal diagnostiziert werden können, also nicht optimal festgestellt werden kann, ob diese in einem bestimmten Moment funktionsfähig sind, so daß aus Sicherheitsgründen nicht immer auf die entsprechende Gangbegrenzung verzichtet werden kann.

Im Stand der Technik ist aus der DE-A-199 05 627 eine Steuereinrichtung für ein Schaltgetriebe in einem Kraftfahrzeug bekannt, die eine Mehrzahl von Sensoren aufweist, wobei die Sensoren in bestimmten Abständen angeordnet bzw. so vorgesehen sind, daß mit Hilfe dieser Sensoren die unterschiedlichen Schaltstellungen des Wählhebels ermittelt werden können. Mit der hier beschriebenen Anordnung der Mehrzahl der Sensoren soll die Ausfallsicherheit des Sensorsystems erhöht werden.

Aus der DE-A-41 35 362 ist eine elektrische Steuereinrichtung für ein automatisches Schaltgetriebe bekannt, bei der zur Erfassung der am Wählhebel eingestellten Position über die Anordnung mehrerer Kontakte die verschiedenen Schaltpositionen erkannt werden, woraufhin ein Bitmuster erzeugt und vom dem elektronischen Getriebesteuergerät verarbeitet wird, wobei der Positionscode bei einfachen Fehlern "korrigierbar" ist bzw. wird.

Im Stand der Technik, vom dem die Erfindung ausgeht, ist eine Steuereinrichtung bekannt, die in der nicht vorveröffentlichten Patentanmeldung 199 38 528 beschrieben wird und bei der eine "dynamische Diagnose" erfolgt, wenn der Wählhebel außerhalb der Position M für manuelle Schaltungen, nämlich außerhalb der Tipgasse bewegt wird. Hierzu sind in der Tipgasse Hallgeber jeweils für den ersten und zweiten Tipschalter sowie für die Position M zwischen dem ersten und zweiten Tipschalter vorgesehen, die mit einem ersten, einem Wählhebel zugeordneten Dauermagneten entsprechend ausgelöst werden können. Es ist zusätzlich ein zweiter Dauermagnet vorgesehen, der in einem bestimmten Abstand zum ersten Dauermagneten angeordnet ist und der an der den Wählhebel-Schwenkbereich abdeckenden Jalousie fixiert ist. Dieser zweite Dauermagnet ist so angeordnet, daß er aus der Position Parksperre P in die Position Rückwärts R kommend, den Hallgeber für den ersten Tipschalter (Tip +) auslöst und bei der entsprechenden Bewegung des Wählhebels dann die übrigen Hallgeber mit Hilfe dieses zweiten Dauermagneten sequentiell hintereinander ausgelöst werden. In dem Moment, wo die Hallgeber nacheinander ausgelöst werden, werden Prüfsignale an das Steuergerät gesendet. Eine separat vorgesehene Auswerteschaltung mit einem Sequenzgenerator erzeugt hier die entsprechenden Signale aufgrund der anliegenden Prüfsignale. In dem Moment wo alle Hallgeber als einwandfrei dedektiert werden, nämlich das entsprechende Frequenzmuster vorliegt, kann dann der Wählhebel von der Position Vorwärts D in die Position M für manuelle Schaltungen eingelegt werden. Liegt nach der "dynamischen Diagnose" aller Hallgeber das entsprechende Frequenzmuster nicht an, so wird detektiert, daß mindestens ein Hallgeber bzw. eine diesem Hallgeber zu geordnete Steuerleitung eben nicht einwandfrei funktioniert und es erfolgt - vor der Einlegung des Wählhebels in die Position M für manuelle Schaltungen - ein akustisches und/oder optisches Warnsignal für den Fahrer, zur Anzeige, daß die manuellen Schaltbetätigungen hier nicht funktionieren.

Schließlich ist eine gattungsgemäße Steuereinrichtung bekannt (EP 0 899 479 A1), wobei hier auch verschiedene Positionsgeber vorgesehen sind. Allerdings können hier die Funktionen dieser Positionsgeber im geschalteten Zustand nicht überprüft werden.

Die oben beschriebene "dynamische Diagnose" der bekannten Steuereinrichtung ist noch nicht optimal ausgebildet. Einerseits kann in der Position Parksperre P des Wählhebels nicht diagnostiziert werden, ob alle Hallgeber bzw. die diesen Hallgebern zugeordneten Steuerleitungen einwandfrei funktionieren. Es erfolgt bei der bekannten Steuereinrichtung eine dynamische sequentielle Abfrage der einzelnen Hallgeber (Positionsgeber) und zwar nur bei der entsprechenden Betätigung des Wählhebels aus der Position der Parksperre P in Richtung auf die Position Vorwärts D. Erst kurz vor Erreichen der Position Vorwärts D kann dann der Fahrer durch das akustische oder optische Warnsignal gewarnt werden, falls ein Fehler anliegt. Dies kann zu überhasteten Reaktionen des Fahrers führen, wenn dieser bereits die Position M für manuelle Schaltungen einlegen will und erst jetzt, nämlich kurz vorher entsprechend gewarnt wird. Andererseits ist es mit der bekannten Steuereinrichtung auch nicht möglich zwischen den Steuerleitungen möglicherweise existierende Kurzschlüsse rechtzeitig mit Hilfe des Steuergerätes zu dedektieren. Im Ergebnis ist die Ausbildung dieser bekannten Steuereinrichtung, von der die Erfindung ausgeht, noch nicht optimal.

Der Erfindung liegt daher die Aufgabe zugrunde, eine Steuereinrichtung der eingangs genannten Art derart auszugestalten und weiterzubilden, daß eine frühzeitige Warnung für den Fahrer des Kraftfahrzeuges möglichst optimal gewährleistet ist und/oder eine Überprüfung der Steuerteitungen auf Kurzschlüsse möglich ist.

Die zuvor aufgezeigte Aufgabe ist nun mit den Merkmalen des Kennzeichnungsteils des Patentanspruches 1 bzw. mit den Merkmalen des Kennzeichnungsteiles des Patentanspruches 2 gelöst.

Durch die erfindungsgemäße ausgebildete Steuereinrichtung erfolgt nunmehr eine "statische Diagnose" und nicht - wie bisher im Stand der Technik - eine "dynamische Diagnose" der einzelnen Positionsgeber, insbesondere der Hallgeber. Im Ruhezustand des Kraftfahrzeuges, nämlich im geparkten Zustand, also wenn der Wählhebel in der Position Parksperre P steht, ist sofort, wenn der Fahrer die Elektrik des Kraftfahrzeuges aktiviert eine Überprüfung aller Positionsgeber in der Tipgasse möglich. Der Wählhebel braucht also nicht mehr - wie bisher im Stand der Technik - entlang der Schaltgasse von der Position P bzw. R bis zur Position D bewegt zu werden, damit eine Überprüfung der Positionsgeber in der Tipgasse erfolgen kann. Folglich wird auch frühzeitig ein Fehler der Positionsgeber bzw. der den Positionsgeber zugeordneten Steuerleitungen erkannt, so daß der Fahrer auch frühzeitig gewarnt werden kann. Überhastete Reaktionen des Fahrers bei diagnostizierten Fehlern werden hierdurch vermieden. Weiterhin ist die erfindungsgemäße Steuereinrichtung schaltungstechnisch so ausgebildet, daß in der Position Neutral N oder Vorwärts D des Wählhebels, also vor Erreichen der Position M für manuelle Schaltungen überprüft werden kann, ob ein Kurzschluß nach Masse, die den Positionsgebern in der Tipgasse zugeordnet sind, existiert, oder nicht. Auch hierdurch bedingt kann der Fahrer des Kraftfahrzeuges rechtzeitig vor dem Einlegen der Position M für manuelle Schaltungen gewarnt werden, so daß überhastete Reaktionen vermieden sind. Schließlich ist die Steuereinrichtung schaltungstechnisch - in einer weiteren Ausführungsform - auch derart ausgebildet, daß in der Position Vorwärts D des Wählhebels alle Positionsgeber überprüfbar und der Ausfall eines Positionsgebers und/oder einer Steuerleitung ermittelbar ist, sowie - als weitere Alternative - die Steuereinrichtung schaltungstechnisch so ausgebildet ist, daß in der Position Parksperre P des Wählhebels ein Kurzschluß in den den Positionsgebern zugeordneten Steuerleitungen ermittelbar ist. Im Ergebnis werden durch die erfindungsgemäße Steuereinrichtung die eingangs beschriebenen Nachteile vermieden.

Es gibt nun eine Vielzahl von Möglichkeiten, die erfindungsgemäße Steuereinrichtung in vorteilhafter Weise auszugestalten und weiterzubilden. Hierfür darf zunächst auf die dem Patentanspruch 1 bzw. dem Patentanspruch 2 nachgeordneten Patentansprüche verwiesen werden. Im einzelnen sollen nun mehrere bevorzugte Ausführungsformen der Erfindung in der nachfolgenden Beschreibung und der dazugehörenden Zeichnung näher erläutert werden. In der Zeichnung zeigt
- Fig. 1: in vereinfachter schematischer Darstellung einen grundsätzlichen Schaltplan für die hier erläuterten Ausführungsformen der erfindungsgemäßen diagnosefähigen Steuereinrichtung,
- Fig.2a-g: in vereinfachter schematischer Darstellung die unterschiedlichen Stellungen des Wählhebels und die gemäß einer ersten Ausführungsform der erfindungsgemäßen Steuereinrichtung damit verbundenen Schalterstellungen bzw. Betätigung der Positionsgeber,
- Fig.3: in vereinfachter schematischer Darstellung einen erweiterten Schaltplan für eine zweite Ausführungsform der erfindungsgemäßen diagnosefähigen Steuereinrichtung, nämlich mit einer zusätzlichen Paddelschaltung,
- Fig. 4a-g: die unterschiedlichen Schalterpositionen bzw. Betätigung der Positionsgeber in vereinfachter schematischer Darstellung für diese zweite Ausführungsform,
- Fig. 5: eine Tabelle mit den gültigen bzw. ungültigen Schaltpositionen,
- Fig. 6a-f: in vereinfachter schematischer Darstellung mehrere unterschiedliche Stellungen des Wählhebels und die gemäß einer dritten Ausführungsform der erfindungsgemäßen Steuereinrichtung damit verbundenen Schalterstellungen bzw. Betätigung der Positionsgeber und
- Fig. 7: eine Tabelle mit beispielsweise gültigen Schaltpositionen für die in Fig. 6 dargestellte dritte Ausführungsform der erfindungsgemäßen Steuereinrichtung.

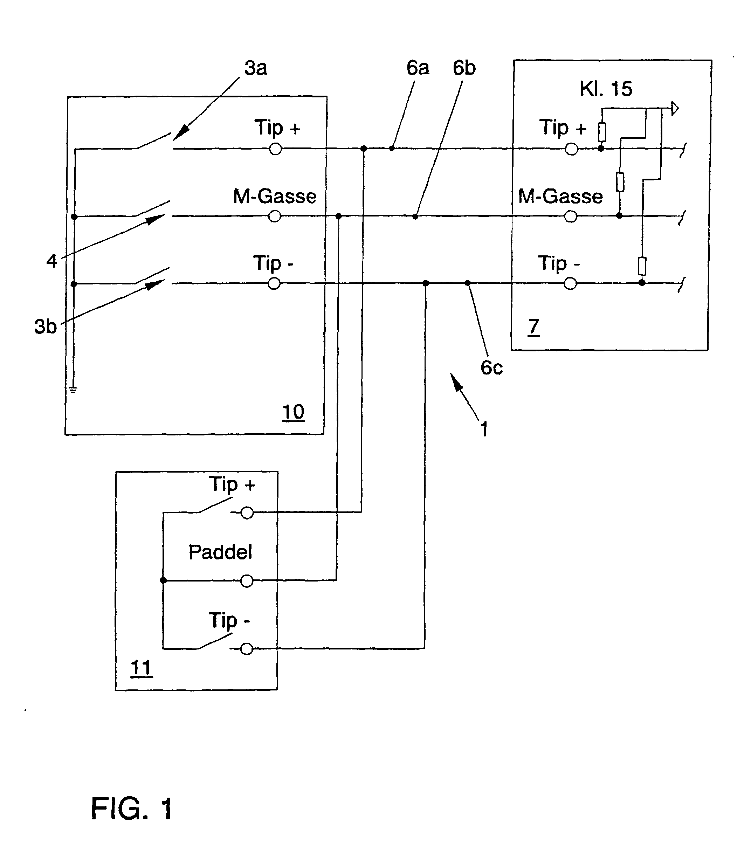

Die Fig. 1 bis 7 zeigen in vereinfachter schematischer Darstellung - zumindest teilweise - die erfindungsgemäße Steuereinrichtung 1 für ein automatisch und manuell schaltbares hier nicht näher dargestelltes Schaltgetriebe in einem ebenfalls nicht dargestellten Kraftfahrzeug.

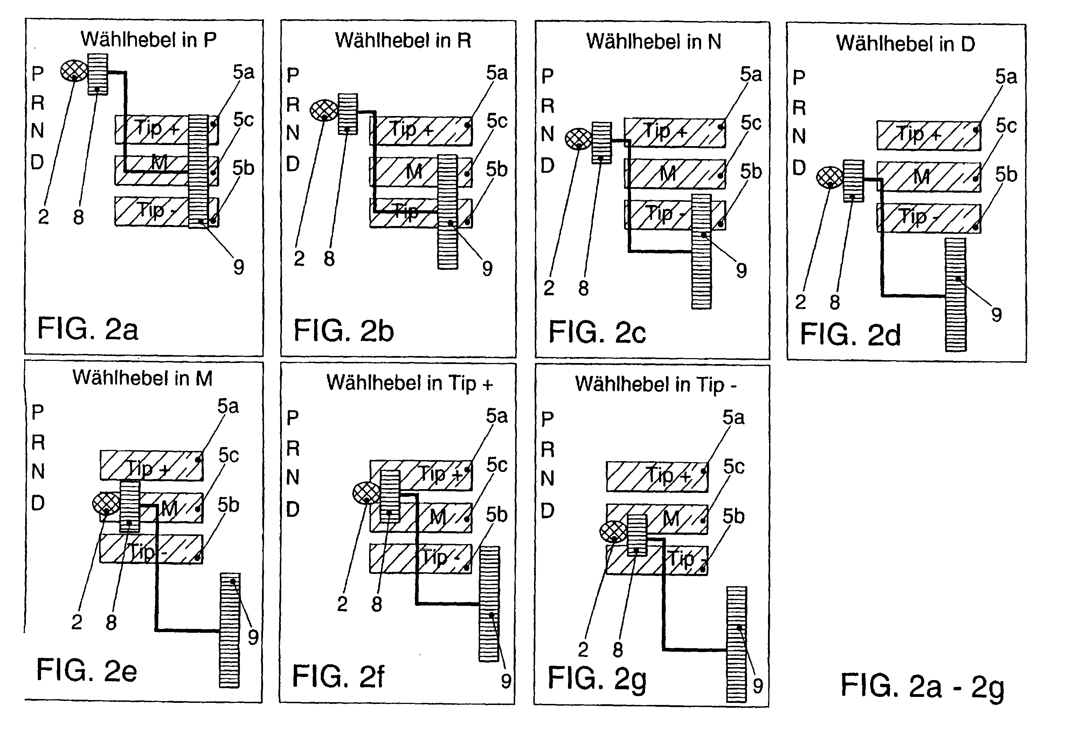

Die hier dargestellte Steuereinrichtung 1 ist auf elektrischer/elektronischer Basis realisiert, was im folgenden noch deutlich werden wird. Die Steuereinrichtung 1 weist - wie aus den Fig. 2 und 4 bzw. 6 ersichtlich - einen Wählhebel 2 zur Einstellung unterschiedlicher Positionen auf. Der Wählhebei 2 kann hier die Positionen Vorwärts D, Neutral N, Rückwärts R und Parksperre P einnehmen und wird hier in der nicht näher bezeichneten Schaltgasse entsprechend in diese Positionen geführt. Weiterhin kann der Wählhebel 2 die Position M für manuelle Schaltungen einnehmen, was insbesondere aus den Fig. 2e bis 2g, Fig. 4e bis 4g sowie Fig. 6c bis 6d deutlich wird. Hier ist der Wählhebel 2 in der ebenfalls nicht näher bezeichneten Tipgasse bewegbar, wobei in dieser Tipgasse der Wählhebel 2 die mittlere Position M für manuelle Schaltungen einnehmen kann und dann innerhalb dieser Tipgasse ein erster und zweiter Tipschalter 3a bzw. 3b betätigbar ist. Der erste Tipschalter 3a ist hier der "Tip +"-Schalter und der zweite Tipschalter 3b ist hier der "Tip -"-Schalter, wobei zwischen dem ersten Tipschalter 3a und dem zweiten Tipschalter 3b hier die Position M liegt bzw. der Schalter 4. Zur Steuerung des Getriebes sind nun entsprechende Positionsgeber 5 und Steuerleitungen 6 vorgesehen, die an ein Steuergerät 7 entsprechende Signale zum manuellen Herauf- oder Herunterschalten der Getriebeübersetzungen abgeben. Ein Ausfall der Positionsgeber 5 und/oder der dem Positionsgebem 5 zugeordnete Steuerleitungen 6 ist ermittelbar.

Hierbei ist von Bedeutung, daß das Steuergerät 7 auf elektrischer/elektronischer Basis realisiert ist, wie dies derzeit im Stand der Technik grundsätzlich auch der Fall ist, so daß sich weitergehende Ausführungen hierzu erübrigen. Dem ersten Tipschalter 3a ist nun ein erster Positionsgeber 5a, dem zweiten Tipschalter 3b ein zweiter Positionsgeber 5b und der Position M für manuelle Schaltungen, also dem Schalter 4 ein dritter Positionsgeber 5c zugeordnet. Anders ausgedrückt, die Positionsgeber 5a bis 5c bilden zumindest teilweise die Schalter 3a, 3b und 4, die durch einen Dauermagneten geschlossen werden.

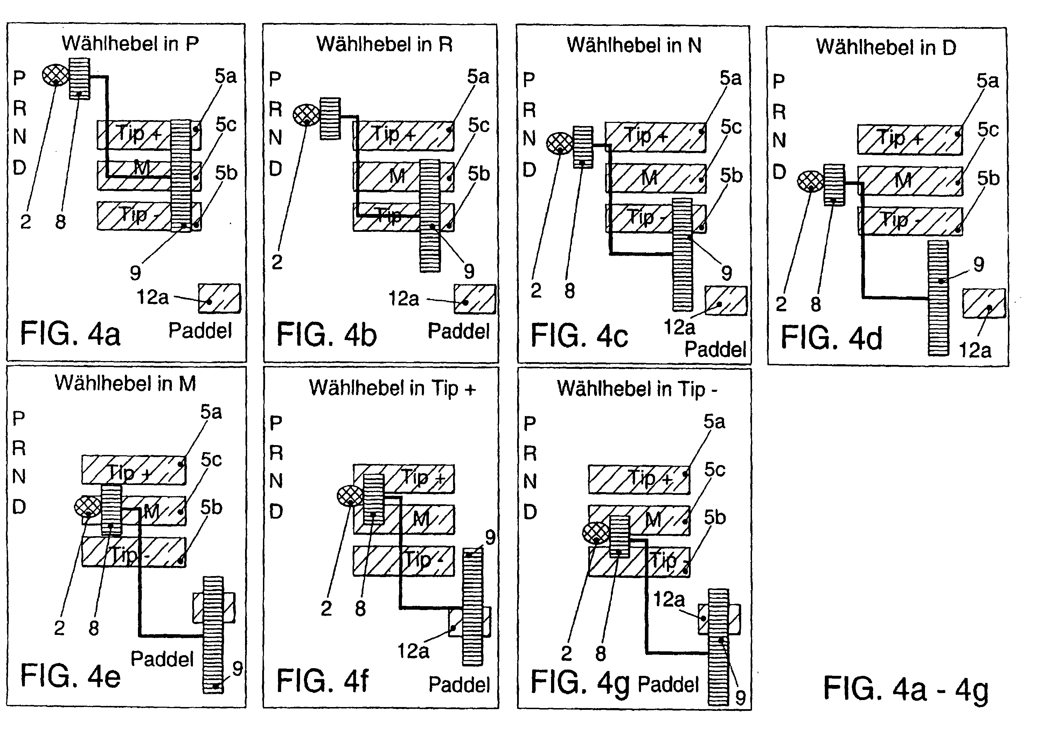

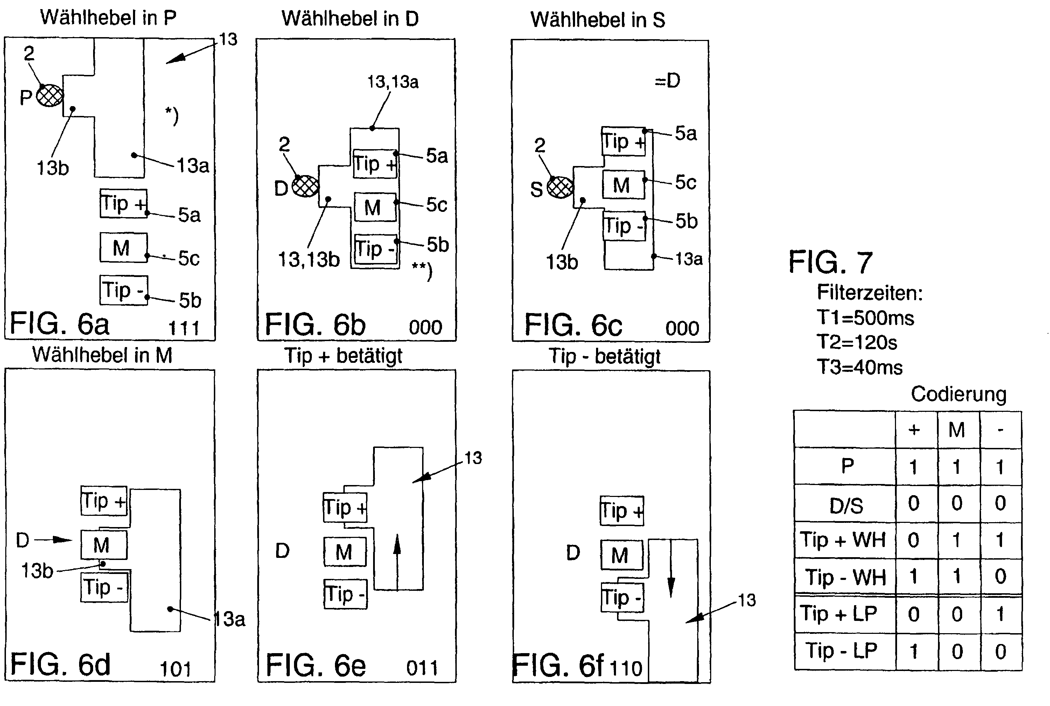

Die Steuereinrichtung 1 ist Schaltungstechnisch so ausgebildet, daß zumindest in der Position Parksperre P oder der Position Rückwärts R des Wählhebels 2 alle Positionsgeber 5 die innerhalb der Tipgasse angeordnet sind, überprüfbar und der Ausfall auch nur eines Positionsgebers 5a, 5b oder 5c ermittelbar ist. Weiterhin ist die Steuereinrichtung 1 schaltungstechnisch so ausgebildet, daß in der Position Neutral N oder der Position Vorwärts D des Wählhebels 2 ein Kurzschluß nach Masse zumindest zwischen einigen der den Positionsgebem 5a, 5b, 5c zugeordneten entsprechenden Steuerleitungen 6a, 6b und 6c ermittelbar ist. Die hier beschriebene schaltungstechnische Ausbildung ist - zumindest teilweise - in den Fig. 2 und 4 dargestellt. Schließlich ist eine weitere Ausführungsform der Erfindung, ersichtlich aus Fig. 6, dargestellt, wobei die Steuereinrichtung 1 schaltungstechnisch so ausgebildet ist, daß in der Position Vorwärts D des Wählhebels 2 alle Positionsgeber 5 überprüfbar und der Ausfall eines Positionsgebers 5, ein Kurzschluß nach "+" und/oder eine Unterbrechung einer Steuerleitung 6 ermittelbar ist und/oder die Steuereinrichtung 1 schaltungstechnisch so ausgebildet ist, daß in der Position Parksperre P des Wählhebels 2 ein Kurzschluß nach Masse zumindest zwischen einigen der den Positionsgebern 5 zugeordneten Steuerleitungen 6 ermittelbar ist. Hierdurch bedingt kann für den Fahrer des Kraftfahrzeuges ein akustisches und/oder optisches Warnsignal bereits langfristig vor dem Einlegen des Wählhebels 2 in die Position M, also vor dem Einführen des Wählhebels 2 in die Tipgasse vermieden werden, wenn der Fahrer das Kraftfahrzeug startet, nämlich die Elektrik einschaltet, wenn bspw. der Wählhebel 2 noch in der Position Parksperre P oder in der Position Vorwärts D steht. Kurzschlüsse zwischen einigen der den Positionsgebem 5a, 5b oder 5c zugeordneten Steuerleitungen 6a, 6b oder 6c sind ermittelbar, wenn der Wählhebel 2 in der Position Neutral N oder in der Position Vorwärts D steht (erste Ausführungsform) oder auch in der Position Parksperre P (dritte Ausführungsform), also langfristig ermittelbar bevor der Wählhebel 2 in die Position M für manuelle Schaltungen bewegt wird. Dies ist abhängig von der jeweiligen Ausführungsform der erfindungsgemäßen Steuereinrichtung 1.

Bei Auftreten eines Fehlers an einem Positionsgebers 5a, 5b, 5c oder an einer Steuerleitung wird eine Fehlermeldung ausgelöst. Die Fehlermeldung löst hier ein akustisches und/oder optisches Warnsignal aus.

Die Positionsgeber 5a, 5b und 5c für die Positionen "Tip +", die Position M oder die Position "Tip -", also die Positionsgeber 5a und 5b für die Tipschalter 3a und 3b werden nun durch Hallgeber gebildet, wie bereits im Stand der Technik dies bekannt ist. In den Fig. 2 und 4 ist eine erste und zweite Ausführungsform der Steuereinrichtung 1 dargestellt. Diese lassen nun erkennen, daß dem Wählhebel 2 ein, zusammen mit dem Wählhebel 2 bewegbarer, erster Dauermagnet 8, als erster Auslöser für die Positionsgeber 5a, 5b und 5c zugeordnet ist. Weiterhin ist ein zweiter Dauermagnet 9, als zweiter Auslöser für die Positionsgeber 5a, 5b und 5c vorgesehen, wobei der zweite Dauermagnet 9 an einer den Wählhebel-Schwenkbereich abdeckenden Jalousie angeordnet sein kann, die hier nicht näher dargestellt ist. Es kann aber auch - wie hier dargestellt - der zweite Dauermagnet 9 über einen Verbindungssteg mit dem ersten Dauermagneten 8 verbunden sein. Der zweite Dauermagnet 9 ist nun so ausgebildet bzw. angeordnet, daß bei der Position Parksperre P des Wählhebels 2 alle Positionsgeber 5a, 5b und 5c ausgelöst werden. Gut zu erkennen ist dies in der Fig. 2a, da hier der zweite Dauermagnet 9 eine entsprechend große Länge aufweist, so daß er alle drei Positionsgeber 5a, 5b und 5c überlappt. In dieser Position des Wählhebels 2 (vgl. Fig.2a) werden folglich alle Positionsgeber 5 ausgelöst.

Im Vergleich zu Fig. 2b, wo der Wählhebel 2 in der Position Rückwärts R ist, wird in dieser Position R des Wählhebels 2 nur der Positionsgeber 5c für die Position M und der Positionsgeber 5b für den zweiten Tipschalter 3b ausgelöst. Fig. 2c zeigt, daß der zweite Dauermagnet 9 so ausgebildet bzw. angeordnet ist, daß bei der Position Neutral N des Wählhebels 2 nur der Positionsgeber 5b für den zweiten Tipschalter 3b ausgelöst wird, wobei bei der Position Vorwärts D des Wählhebels 2 kein Positionsgeber 5 ausgelöst wird (vgl. Fig. 2d).

Die Fig. 2e bis 2g zeigen die Auslösung der Positionsgeber 5 in den verschiedenen Stellungen des Wählhebels 2 durch den ersten Dauermagneten 8, also dann, wenn der Wählhebel 2 ohnehin in der Tipgasse bewegt wird und hier bei der Bewegung des Wählhebels 2 innerhalb der Tipgasse keine Diagnose erforderlich ist. Die Diagnose der Positionsgeber 5 erfolgt in den Stellungen des Wählhebels 2, wenn sich dieser in der Position Parksperre P, Rückwärts R oder Neutral N befindet, also in der Schaltgasse.

Die Fig. 1 zeigt in vereinfachter schematischer Darstellung den grundsätzlichen Schaltplan für die hier gezeigten Ausführungsformen der diagnosefähigen Steuereinrichtung 1. Zu erkennen ist in schematischer Darstellung die Schaltabdeckung 10, das elektronische bzw. auf elektrischer Basis funktionierende Steuergerät 7 sowie ein hier zusätzlich am Lenkrad vorgesehenes Paddel 11 und die entsprechenden Steuerleitungen 6. Die Steuereinrichtung 1 ist schaltungstechnisch nun so ausgebildet, daß bei Betätigung eines Tipschalters 3 ein Massepotential an den Eingang des Steuergerätes 7 geschaltet wird. Folglich kann das Steuergerät 7 erkennen, wenn die entsprechenden Schalter, also der erste Tipschalter 3a, der zweite Tipschalter 3b bzw. der Schalter 4 für die exakte Position M entsprechend betätigt wird, insbesondere dadurch, daß nämlich einer der beiden Dauermagneten 8 oder 9 hier die entsprechenden Positionsgeber 5 auslösen. Befindet sich nun der Wählhebel 2 nicht in der Tipgasse und wird dies dem Steuergerät 7 aufgrund der sich in der normalen Schaltgasse befindenden, hier nicht näher dargestellten Positionsgebem mitgeteilt, so erfolgt die Auslösung der Schalterpositionen in der Tipgasse über den zweiten Dauermagneten 9 und die entsprechende Überprüfung der Positionsgeber 5 bzw. Steuerleitungen 6 mit Hilfe des Steuergerätes 7. Fig. 1 zeigt zusätzlich - was hier am Rande bemerkt werden soll - ein am Lenkrad des Kraftfahrzeug angeordnetes Paddel 11, was hier lediglich darstellen soll, daß die über den Schalthebel 2 möglichen manuellen Schaltungen "Tip +" bzw. "Tip -" auch über das entsprechende Paddel 11 am Lenkrad und die hier vorgesehenen Betätigungstasten erfolgen kann.

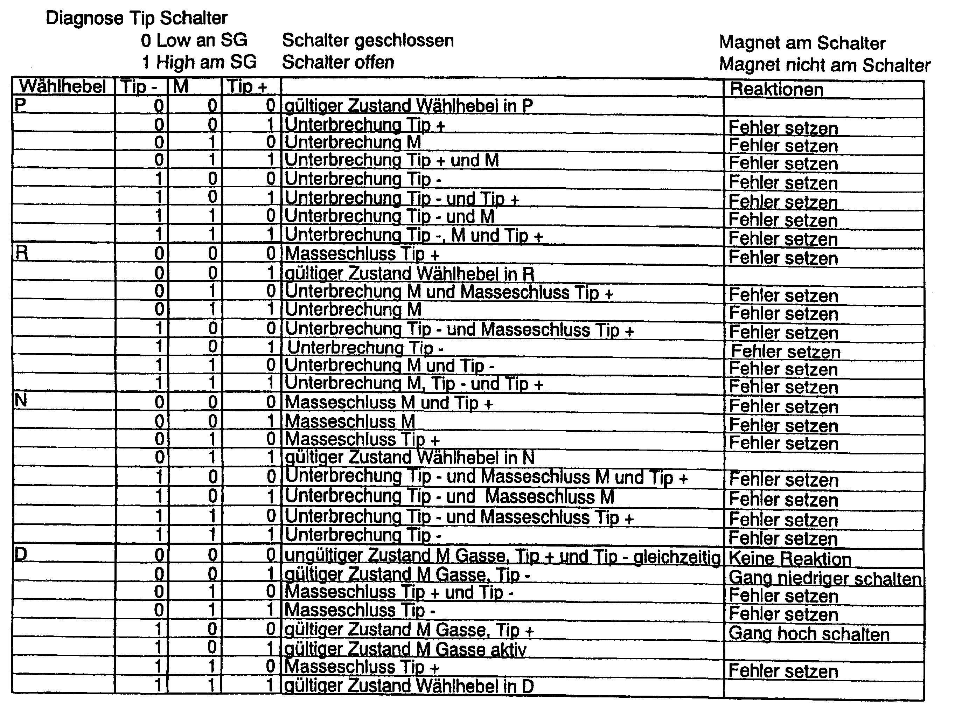

Die in Fig. 5 dargestellte Tabelle gibt nun Aufschluß über die entsprechenden Möglichkeiten der unterschiedlichen Stellungen des Wählhebels 2. Hierbei ist ein geschlossener Schalter mit der Ziffer "0" und ein offener Schalter mit der Ziffer "1" bezeichnet. Dargestellt sind die entsprechenden "Zustände" bei der Stellung des Wählhebels 2 in der Position Parksperre P, Rückwärts R, Neutral N und Vorwärts D, also insbesondere die in den Fig. 2a bis 2d bzw. 4a bis 4d gezeigten Positionen. Gemäß der "Matrix" in der Fig. 5 wird durch das Steuergerät 7 dann ein "Fehler gesetzt", wenn kein gültiger Zustand ermittelt wird. Für jede Stellung des Wählhebels 2 in den unterschiedlichen hier gezeigten Positionen P, R, N oder D ist nämlich nur eine einzige Diagnose möglich, die den gültigen Zustand beschreibt, also den Zustand, wo ermittelt wird, daß die entsprechenden Positionsgeber 5 bzw. Steuerleitungen 6 funktionstüchtig sind. Werden nämlich bspw. in der Position Parksperre P für den Wählhebel 2 durch den zweiten Dauermagneten 9 nicht alle Positionsgeber 5a, 5b und 5c also hier die entsprechend angeordneten Hallgeber ausgelöst, so liegen nicht alle Signale mit der Ziffer "0" an und es wird ein "Fehler" gesetzt. So muß in der Position Rückwärts R des Wählhebels 2 der erste Tipschalter 3a geöffnet sein, da dieser hier nicht durch den zweiten Dauermagneten 9, d.h. der Positionsgeber 5a als Hallgeber hier nicht über den zweiten Dauermagneten 9 ausgelöst wird. Der gültige Zustand für den Wählhebel 2 in der Position Rückwärts R hat also die Signalfolge "0", "0" und "1" für den zweiten Tipschalter 3b, den Schalter 4 und den ersten Tipschalter 3a, bzw. für die hier vorgesehenen Positionsgeber 5 bzw. Steuerleitungen 6. Für alle übrigen Kombinationen setzt das Steuergerät 7 entsprechende Fehler und es wird die akustische und/oder optische Wameinrichtung ausgelöst. Die übrigen gültigen Zustände des Wählhebels 2 in der Position Neutral N und in der Position Vorwärts D sind der Tabelle aus Fig. 5 zu entnehmen.

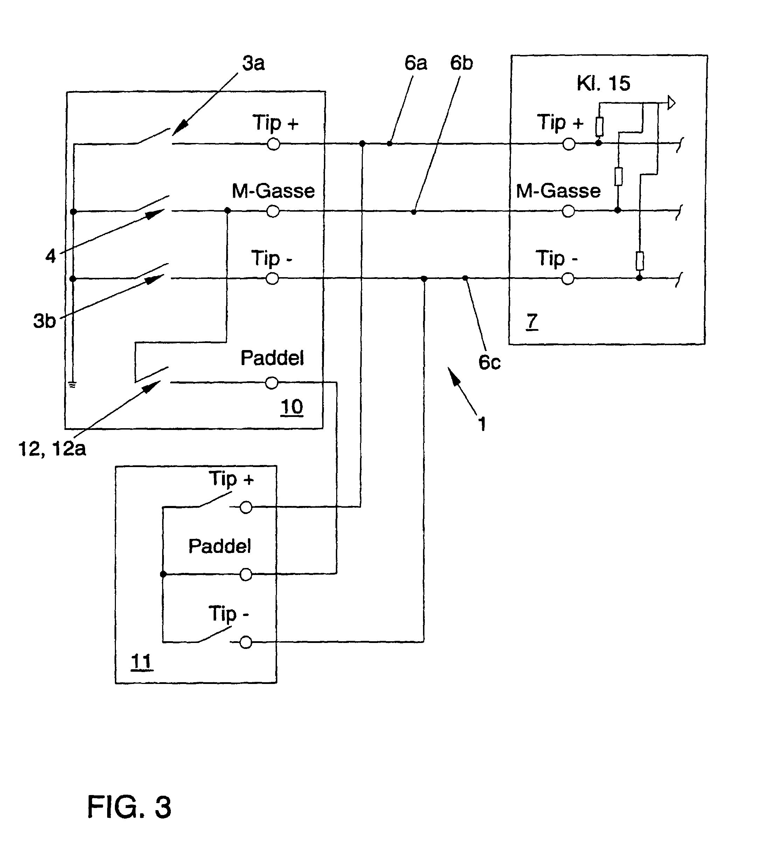

Die Diagnose erfolgt nun mit Hilfe des Steuergerätes 7, das teilweise auf elektronisch/elektrischer Basis funktioniert, vzw. ein Mikroprozessor mit entsprechender Software aufweist und über die für die Positionsgeber 5 existierenden Steuerleitungen 6, nämlich die aus Fig. 1 und 3 erkennbare "drei-adrige Verdrahtung". Durch die an den Eingängen des elektronischen Steuergerätes 7 ankommenden Signale der unterschiedlichen Schalterpositionen bzw. "Positionsgeber"-Auslösungen in Kombination mit der aktuellen Position des Wählhebels 2 kann dann eine Auswertung erfolgen (vgl. Fig. 5). Die aktuelle Position des Wählhebels 2 in der Schaltgasse wird über zusätzlich vorgesehene Sensoren ermittelt. Steht der Wählhebel 2 also nicht in der Tipgasse sondern in der normalen Schaltgasse, so ermittelt das Steuergerät 7 anhand der nun ankommenden Signale die Funktionstüchtigkeit bzw. Funktionsuntüchtigkeit der einzelnen Positionsgeber 5 bzw. Steuerleitungen 6, ohne daß eine dynamische Bewegung des Wählhebels 2 erforderlich ist. Hier erfolgt also eine "statische" Ermittlung der Funktionstüchtigkeit bzw. Untüchtigkeit.

Die Fig. 3 und 4 zeigen hier im Vergleich zu den Fig. 1 und 2 noch eine zweite weitere Ausführungsform der Steuereinrichtung 1, da hier eine Paddelschaltung 12 vorgesehen ist, die parallel zu den auf der Schaltabdeckung10 angeordneten Schaltern geschaltet ist und wobei innerhalb der Schaltabdeckung 10 noch ein zusätzlicher Hallschalter 12a integriert ist. Die hier gezeigte Schaltung hat den Vorteil, daß die Paddelschaltung 12 hier nur aktiviert wird, wenn auch der Wählhebel 2 in der Position M, d.h. sich in der Tipgasse befindet und somit diese Paddelschaltung 12 freischaltet, da es bspw. bei der Schaltung in Fig. 1 zu einer Fehldiagnose kommen könnte, wenn der Wählhebel 2 sich in der Position Rückwärts R befindet und der "Tip +"-Schalter am Paddel 11 gedrückt wird. Hier gemäß Fig. 3 ist nun der zweite Dauermagnet 9 so angeordnet, daß die Paddelschaltung 12 erst aktiviert wird, wenn der Wählhebel 2 sich in der Tipgasse befindet. So wird eine Fehldiagnose vermieden.
Kurzschlüsse und Unterbrechungen im Schaltkreis können auch diagnostiziert werden, ja es können sogar Doppelfehler (z.B. Unterbrechung "Tip+" und "Tip-" erkannt werden), so daß rechtzeitig Wammeldungen erfolgen können. Hierdurch kann bei einem automatischen Schaltgetriebe auf die zusätzlichen eingangs beschriebenen Wählhebelstellungen "3" bis "1" verzichtet werden. Vzw. erfolgt hier die Diagnose über die vorhandene drei-adrige Verdrahtung, so daß keine zusätzliche Diagnoseleitung erforderlich ist. Bspw. wird auch keine zusätzliche Elektronik in der Schaltabdeckung 10 benötigt.

Eine einfache und kostengünstige Art der Lösung ist über den zweiten Dauermagneten 9 gefunden, der in der Schaltabdeckung 10 mit dem eigentlichen Schaltmagneten 8 mechanisch verkoppelt wird, so daß er in der Wählhebelstellung Parksperre P alle drei Schalter 3a, 3b und 4 betätigt. Beide Dauermagneten 8 und 9 sind so miteinander verbunden, daß sie nicht einzeln abfallen. Die in den Fig. 2 und 4 dargestellte Anordnung der ersten und zweiten Dauermagneten 8 und 9 ist im wesentlichen Z-förmig.

Während nun die Fig. 1 bis 5 eine erste und zweite Ausführungsform für die erfindungsgemäße Steuereinrichtung 1 zeigen, nämlich eine Z-förmige Anordnung des ersten und zweiten Dauermagneten 8 und 9, zeigt die Fig. 6 eine dritte Ausführungsform für die erfindungsgemäße Steuereinrichtung 1.

Mit Hilfe dieser dritten Ausführungsform für die Steuereinrichtung 1 ist die Steuereinrichtung 1 schaltungstechnisch nunmehr so ausgebildet, daß in der Position Vorwärts D des Wählhebels 2 alle Positionsgeber 5 überprüfbar und der Ausfall eines Positionsgebers 5 und/oder einer Steuerleitung 6 ermittelbar ist, oder - als weitere zusätzliche Alternative - daß in der Position Parksperre P des Wählhebels 2 ein Kurzschluß nach Masse in einigen zugeordneten Steuerleitungen 6 ermittelbar ist.

Grundsätzlich ist der in den Fig. 1 und 3 dargestellte Schaltplan auch der dritten Ausführungsform der erfindungsgemäßen Steuereinrichtung 1 zugrunde zu legen. Der wesentliche Unterschied zu der ersten und zweiten Ausführungsform besteht nun darin, daß der erste und zweite Dauermagnet 8 und 9 hier nicht in einer Art Z-Form zueinander angeordnet sind, sondern in einer Art T-Form zueinander angeordnet sind. Bei der hier dargestellten bevorzugten Ausführungsform ist der erste und zweite Dauermagnet 8 und 9 "quasi" zu einer einzigen Baueinheit 13 zusammengefasst worden, so daß die Baueinheit 13 einen Prüfmagnet-Teil 13a und einen Schaltmagnet-Teil 13b aufweist. Hierbei ist der Prüfmagnet-Teil 13a und der Schaltmagnet-Teil 13b zueinander T-förmig angeordnet. Die hier dargestellte Baueinheit 13 kann direkt an dem Wählhebel 2 oder auch an der Schaltabdeckung 10 in einer bestimmten Position angeordnet sein. Dies ist abhängig von der jeweiligen spezifischen Ausführungsform.

Von besonderem Vorteil bei dieser Ausführungsform ist, daß die T-förmige Anordnung der Magneten keines großen Bauraumes bedarf, so daß eine sehr raumsparende Konstruktion möglich ist. Die T-förmige Anordnung führt daher zu weniger Bauraumproblemen. Die Magnete rücken zusammen und können daher zu einem Bauteil, nämlich zu einer Baueinheit 13 zusammengefasst werden, so daß der in den Fig. 2 und 4 dargestellte, aber hier nicht näher bezeichnete, mechanische Verbindungssteg zwischen den Dauermagneten 8 und 9 entfallen kann.

Der wesentliche Unterschied in Bezug auf die dritte Ausführungsform ist aber nunmehr, daß die "Prüflogik" - verglichen mit der "Prüflogik" zu den ersten beiden Ausführungsformen - nunmehr invertiert wird, d.h. in der Position Parksperre P für den Wählhebel 2 nun alle Positionsgeber 5 nicht aktiviert bzw. ausgelöst sind, sondern diese Positionsgeber 5 nur noch in der Position Vorwärts D des Wählhebels 2 aktiviert bzw. ausgelöst sind (Schalter geschlossen). Vzw. entfallen bei der dritten Ausführungsform daher die Prüfungen bzw. Diagnosen in den Stellungen Rückwärts R und Neutral N des Wählhebels 2.

Wie die Fig. 6a bis 6f zeigen, insbesondere die Fig. 5a, steht der Wählhebel 2 hier in der Position Parksperre P, wobei sich der Prüfmagnet-Teil 13a außerhalb der Tipp-Sensoren, nämlich der Positionsgeber 5 befindet, so daß alle Positionsgeber 5a, 5b und 5c hier nicht aktiviert sind. Da die Sensoren von dem Prinzip "Schalter gegen Masse" geschaltet sind, liegt hier in diesem offenen Zustand am Steuergerät 7 ein "High"-Signal, also das Signal "1" an. Masseschlüsse werden erkannt, wenn ein "Low"-Signal am Eingang des Steuergerätes 7 anliegt (Signal "0"). Die Fig. 6a zeigt daher eine Signalfolge für die Schalter bzw. die Positionsgeber 5 von "1/1/1" für alle drei hier dargestellten Positionsgeber 5a, 5b und 5c. In dieser hier dargestellten Positionierung des Wählhebels 2, also für die Fig. 6a sind daher Kurzschlüsse nach Masse an den den Positionsgebem 5 zugeordneten Steuerleitungen 6 ermittelbar.

In der Fig. 6b steht der Wählhebel 2 in der Position Vorwärts D, so daß der Prüfmagnet-Teil 13a alle Positionsgeber 5a, 5b und 5c hier überlappt. Folglich liegt in diesem Fall am Eingang des Steuergerätes 7 die Signalfolge "0/0/0" an, da ein entsprechendes "Low"- Signal am Steuergerät 7 jeweils anliegt. In diesem Fall können Leitungsunterbrechungen oder ein Kurzschluß nach "+" der Steuerleitungen 6 bzw. auch ein Ausfall der Positionsgeber 5a, 5b und 5c, bspw. nach einem "Abfall" der Positionsgeber 5 erkannt werden. Gleiches gilt für die Stellung des Wählhebels 2 in Fig. 6c, nämlich hier in der Position der Sportlichkeitsstufe "S". Die Fig. 6c ist hier nur zusätzlich dargestellt und zeigt eine andere Alternative für Vorwärts "D" ähnlich zu der Fig. 6b.

Wird, wie in der Fig. 6d dargestellt, der Wählhebel 2 nunmehr aus der Schaltgasse in die Tippgasse bewegt, nämlich in die Stellung für die Position M für manuelle Schaltungen, so wird durch die hier T-förmig ausgebildete Baueinheit 13 nur noch der mittlere Sensor, nämlich der Positionsgeber 5c betätigt bzw. ausgelöst. Die Signale der Sensoren für "Tipp +" und "Tipp -" wechseln ihren Zustand von "Low" auf "High". Bei der entsprechenden Bewegung des Wählhebels 2 nach "Tipp +" wird nun der entsprechende Positionsgeber 5a aktiviert, so daß hier das Signal von "1" auf "0" wechselt. Entsprechendes gilt für die Bewegung des Wählhebels 2 nach "Tipp -".

Für das Wechseln des Wählhebels 2 in die Tippgasse, aus der Schaltgasse kommend, gilt das gleiche wie für die beiden ersten Ausführungsformen, da bei der dritten Ausführungsform die ebenfalls angeordneten Lenkradpaddelschalter "Tipp +" und "Tipp - " entsprechend geschaltet werden können. Nur wenn hier der entsprechende Sensor bzw. der Schalter 4 aktiviert ist, sind daher die Lenkradpaddelschalter auch freigeschaltet. Ansonsten sind die Lenkradpaddelschalter am Lenkrad gesperrt. Die Schaltung ist so ausgeführt, daß bei einer entsprechend aktivierten Tippgasse und bei sequentieller Betätigung der Paddelschaltung das System in dem zuerst erkannten Zustand gehalten wird. Werden beide Paddelschalter absolut zeitgleich betätigt, so erkennt das System den gleichen Zustand wie in der Fahrstufe Vorwärts D und schaltet in den sicheren Automatikbetrieb, vzw. Vorwärts D zurück.

Für die in den Fig. 6a bis 6f dargestellte dritte Ausführungsform ist in Fig. 7 die entsprechende Logiktabelle dargestellt. Hier sind jeweils die gültigen Zustände aufgeführt. Die ersten vier Zeilen zeigen die gültigen Schaltzustände für den Wählhebel 2 und die letzten beiden Zeilen zeigen die gültigen Schaltzustände bei Betätigung der Lenkradpaddelschalter. Sollte eine andere Kodierung am Eingang des Steuergerätes 7 als hier dargestellt für die einzelnen Schaltzustände ermittelt werden, so wird jeweils vom Steuergerät 7 ein "Fehler" gesetzt. Hierdurch ergibt sich jeweils eine Matrix (vgl. Fig. 7), so daß die gültigen und die ungültigen Schalterkombinationen erkannt werden können. Aus ungültigen Schalterkombinationen lassen sich Rückschlüsse auf Ausfälle von Positionsgebem 5, Unterbrechungen der Steuerleitungen 6 bzw. auf entsprechende Masseschlüsse ziehen.

### BEZUGSZEICHENLISTE

- 1: Steuereinrichtung
- 2: Wählhebel
- 3a.: erster Tippschalter
- 3b.: zweiter Tippschalter
- 4: Schalter
- 5: Positionsgeber
- 5a: erster Positionsgeber
- 5b: zweiter Positionsgeber
- 5c: dritter Positionsgeber
- 6: Steuerleitungen
- 6a: Steuerleitungen
- 6b: Steuerleitungen
- 6c: Steuerleitungen
- 7: Steuergerät
- 8: erster Dauermagnet
- 9: zweiter Dauermagnet
- 10: Schaltabdeckung
- 11: Paddel
- 12: Paddelschaltung
- 12a: Hallschalter
- 13: Baueinheit
- 13a: Prüfmagnet-Teil
- 13b: Schaltmagnet-Teil

## Patentansprüche

1. Steuereinrichtung (1) für ein automatisch und manuell schaltbares Schaltgetriebe in einem Kraftfahrzeug, mit einem Wählhebel (2) zur Einstellung zumindest der Positionen Vorwärts (D), Neutral (N), Rückwärts (R), Parksperre (P) und einer Position (M) für manuelle Schaltungen, wobei in der Position (M) für manuelle Schaltungen ein erster und zweiter Tippschalter (3a, 3b) betätigbar ist, wobei zur Steuerung des Getriebes über Positionsgeber (5) und Steuerleitungen (6) an ein Steuergerät (7) entsprechende Signale zum manuellen Herauf- und Herunterschalten der Getriebeübersetzungen abgegeben werden und wobei ein Ausfall der Positionsgeber (5) und/oder der den Positionsgebern (5) zugeordneten Steuerleitungen (6) ermittelbar ist, **dadurch gekennzeichnet, dass** die Steuereinrichtung (1) schaltungstechnisch so ausgebildet ist, dass zumindest in der Position Parksperre (P) oder Rückwärts (R) des Wählhebels (2) durch ein Auslösen mindestens eines der Positionsgeber (5) mindestens einer der ausgelösten Positionsgeber (5) überprüfbar und der Ausfall eines Positionsgebers (5) und/oder einer Steuerleitung (6) ermittelbar ist und dass bei der Ermittlung des Ausfalls eines Positionsgebers (5) und/oder einer Steuerleitung (6) eine Fehlermeldung ausgelöst wird.

2. Steuereinrichtung (1) für ein automatisch und manuell schaltbares Schaltgetriebe in einem Kraftfahrzeug, mit einem Wählhebel (2) zur Einstellung zumindest der Positionen Vorwärts (D), Neutral (N), Rückwärts (R), Parksperre (P) und einer Position (M) für manuelle Schaltungen, wobei in der Position (M) für manuelle Schaltungen ein erster und zweiter Tippschalter (3a, 3b) betätigbar ist, wobei zur Steuerung des Getriebes über Positionsgeber (5) und Steuerleitungen (6) an ein Steuergerät (7) entsprechende Signale zum manuellen Herauf- und Herunterschalten der Getriebeübersetzungen abgegeben werden und wobei ein Ausfall der Positionsgeber (5) und/oder der den Positionsgebern (5) zugeordneten Steuerleitungen (6) ermittelbar ist, **dadurch gekennzeichnet, dass** die Steuereinrichtung (1) schalttechnisch so ausgebildet ist, dass in der Position Vorwärts (D) des Wählhebels (2) durch ein Auslösen mindestens eines der Positionsgeber (5) mindestens einer der ausgelösten Positionsgeber (5) überprüfbar und der Ausfall eines Positionsgebers (5) und/oder einer Steuerleitung (6) ermittelbar ist und dass bei der Ermittlung des Ausfalls eines Positionsgebers (5) und/oder einer Steuerleitung (6) eine Fehlermeldung ausgelöst wird.

3. Steuereinrichtung nach Anspruch 1 oder 2, **dadurch gekennzeichnet, dass** alle Positionsgeber (5) durch ein Auslösen der Positionsgeber (5) überprüfbar sind.

4. Steuereinrichtung nach einem der vorstehenden Ansprüche, **dadurch gekennzeichnet, dass** bei der Ermittlung eines Kurzschlusses nach Masse oder ein Kurzschluß nach "+" eine Fehlermeldung ausgelöst wird.

5. Steuereinrichtung nach einem der vorstehenden Ansprüche, **dadurch gekennzeichnet, daß** die Positionsgeber (5) für die Position (M) für manuelle Schaltungen und die Positionsgeber (5) für die Tippschalter (3a bzw. 3b) durch Hallgeber gebildet sind.

6. Steuereinrichtung nach einem der vorstehenden Ansprüche, **dadurch gekennzeichnet, daß** dem Wählhebel (2) ein, zusammen mit dem Wählhebel (2) bewegbarer, erster Dauermagnet (8) - als erster Auslöser für die Positionsgeber (5) - zugeordnet ist.

7. Steuereinrichtung nach einem der vorstehenden Ansprüche, **dadurch gekennzeichnet, daß** ein zweiter Dauermagnet (9) - als zweiter Auslöser für die Positionsgeber (5) - vorgesehen ist und der zweite Dauermagnet (9) an einer den Wählhebel-Schwenkbereich abdeckenden Jalousie angeordnet ist.

8. Steuereinrichtung nach Anspruch 7, **dadurch gekennzeichnet, daß** der zweite Dauermagnet (9) so ausgebildet bzw. angeordnet ist, daß bei der Position Parksperre (P) des Wählhebels alle Positionsgeber (5) ausgelöst werden.

9. Steuereinrichtung nach einem der vorstehenden Ansprüche 7 oder 8, **dadurch gekennzeichnet, daß** der zweite Dauermagnet (9) so ausgebildet bzw. angeordnet ist, daß bei der Position Rückwärts (R) des Wählhebels (2) der Positionsgeber (5b bzw. 5c) für die Position (M) und für den zweiten Tippschalter (3b) ausgelöst werden.

10. Steuereinrichtung nach einem der vorstehenden Ansprüche 7 bis 9, **dadurch gekennzeichnet, daß** der zweite Dauermagnet (9) so ausgebildet bzw. angeordnet ist, daß bei der Position Neutral (N) des Wählhebels (2) der Positionsgeber (5c) für den zweiten Tippschalter (3b) ausgelöst wird.

11. Steuereinrichtung nach einem der vorstehenden Ansprüche 7 bis 10, **dadurch gekennzeichnet, daß** der zweite Dauermagnet (9) so ausgebildet bzw. angeordnet ist, daß bei der Position Vorwärts (D) des Wählhebels (2) kein Positionsgeber (5) ausgelöst wird.

12. Steuereinrichtung nach einem der vorstehenden Ansprüche, **dadurch gekennzeichnet, daß** eine Paddelschaltung (12) vorgesehen ist und die Paddelschaltung (12) nur bei der Position (M) für manuelle Schaltungen aktiviert ist.

13. Steuereinrichtung nach einem der vorstehenden Ansprüche, **dadurch gekennzeichnet, daß** die Steuereinrichtung (1) so ausgeführt ist, daß bei Betätigung eines Tippschalters (3a, 3b) ein Massepotential an den Eingang des Steuergerätes (7) geschaltet wird.

14. Steuereinrichtung nach einem der vorstehenden Ansprüche, **dadurch gekennzeichnet, daß** die Signale der unterschiedlichen Schalterpositionen von dem elektronischen Getriebesteuergerät (7) ausgewertet werden.

15. Steuereinrichtung nach einem der vorstehenden Ansprüche, **dadurch gekennzeichnet, daß** die Diagnose mit Hilfe des Steuergerätes (7) über die für die Positionsgeber (5) existierenden Steuerleitungen (6), nämlich über eine 3-adrige Verdrahtung erfolgt.

16. Steuereinrichtung nach den Ansprüchen 6 und 7 und gegebenenfalls nach einem der vorstehenden Ansprüche 8 bis 15, **dadurch gekennzeichnet, daß** der erste und zweite Dauermagnet (8, 9) zueinander in einer Art Z-Form angeordnet sind.

17. Steuereinrichtung nach den Ansprüchen 6 und 7 und gegebenenfalls nach einem der vorstehenden Ansprüche 8 bis 16, **dadurch gekennzeichnet, daß** der erste und zweite Dauermagnet (8, 9) als eine Baueinheit (13) ausgebildet ist, so daß die Baueinheit (13) ein Prüfmagnet-Teil (13a) und einen Schaltmagnet-Teil (13b) aufweist.

18. Steuereinrichtung nach den Ansprüchen 6 und 7 und gegebenenfalls nach einem der vorstehenden Ansprüche 8 bis 17, **dadurch gekennzeichnet, daß** der erste und zweite Dauermagnet (8, 9) mechanisch verbunden sind.

19. Steuereinrichtung nach den Ansprüchen 6 und 7 und gegebenenfalls nach einem der vorstehenden Ansprüche 8 bis 18, **dadurch gekennzeichnet, daß** der erste und zweite Dauermagnet (8, 9) bzw. der Prüfmagnet-Teil (13a) und der Schaltmagnet-Teil (13b) zueinander in einer Art T-Form angeordnet sind.

20. Steuereinrichtung nach einem der vorstehenden Ansprüche, **dadurch gekennzeichnet, daß** die Baueinheit (13) an dem Wählhebel (2) oder an einer Schaltabdeckung (10) angeordnet ist.

21. Steuereinrichtung nach einem der vorstehenden Ansprüche, **dadurch gekennzeichnet, daß** die Fehlermeldung ein akustisches und/oder optisches Wamsignal auslöst.

22. Steuereinrichtung nach einem der vorstehenden Ansprüche, **dadurch gekennzeichnet, daß** die Positionsgeber (5) als Nockenschalter, optische Sensoren oder andere elektrische bzw. magnetische Sensoren ausgebildet sind.

## Claims

1. Control device (1) for an automatically and manually shiftable gearbox in a motor vehicle, having a selector lever (2) for setting at least the forward (D), neutral (N), reverse (R), parking (P) positions, and a position (M) for manual shifting, it being possible to activate a first and second toggle switch (3a, 3b) in the position (M) for manual shifting, corresponding signals for manually shifting up and down the gearbox transmission ratios being output to a control unit (7) via position sensors (5) and control lines (6) in order to control the gearbox, and it being possible to determine a failure of the position sensors (5) and/or of the control lines (6) which are assigned to the position sensors (5), **characterized in that** the control device (1) is embodied in terms of switching equipment in such a way that at least one of the triggered position sensors (5) can be checked at least in the parked (P) or reverse (R) positions of the selector lever (2) by triggering at least one of the position sensors (5), and the failure of the position sensor (5) and/or of a control line (6) can be determined, and **in that** when the failure of a position sensor (5) and/or of a control line (6) is determined, a fault message is triggered.

2. Control device (1) for an automatically and manually shiftable gearbox in a motor vehicle, having a selector lever (2) for setting at least the forward (D), neutral (N), reverse (R), parking (P) positions, and a position (M) for manual shifting, it being possible to activate a first and second toggle switch (3a, 3b) in the position (M) for manual shifting, corresponding signals for manually shifting up and down the gearbox transmission ratios being output to a control unit (7) via position sensors (5) and control lines (6) in order to control the gearbox, and it being possible to determine a failure of the position sensors (5) and/or of the control lines (6) which are assigned to the position sensors (5), **characterized in that** the control device (1) is embodied in terms of switching equipment in such a way that at least one of the triggered position sensors (5) can be checked at least in the forward (D) position of the selector lever (2) by triggering at least one of the position sensors (5), and the failure of the position sensor (5) and/or of a control line (6) can be determined, and **in that** when the failure of a position sensor (5) and/or of a control line (6) is determined, a fault message is triggered.

3. Control device according to Claim 1 or 2, **characterized in that** all the position sensors (5) can be checked by triggering the position sensors (5).

4. Control device according to one of the preceding claims, **characterized in that** a fault message is triggered when a short circuit to earth or a short circuit to "+" is determined.

5. Control device according to one of the preceding claims, **characterized in that** the position sensors (5) are formed for the position (M) for manual shifting, and the position sensors (5) for the toggle switches (3a and 3b) are formed by Hall sensors.

6. Control device according to one of the preceding claims, **characterized in that** the selector lever (2) is assigned a first permanent magnet (8), which can be moved together with the selector lever (2), as first triggering means for the position sensors (5).

7. Control device according to one of the preceding claims, **characterized in that** a second permanent magnet (9) is provided as second triggering means for the position sensors (5), and the second permanent magnet (9) is arranged on a blind which covers the pivoting region of the selector lever.

8. Control device according to Claim 7, **characterized in that** the second permanent magnet (9) is constructed or arranged in such a way that in the parked (P) position of the selector lever all the position sensors (5) are triggered.

9. Control device according to one of the preceding Claims 7 or 8, **characterized in that** the second permanent magnet (9) is constructed or arranged in such a way that in the reverse (R) position of the selector lever (2) the position sensor (5b or 5c) for the position (M) and the one (5b or 5c) for the second toggle switch (3b) are triggered.

10. Control device according to one of the preceding Claims 7 to 9, **characterized in that** the second permanent magnet (9) is constructed or arranged in such a way that in the neutral (N) position of the selector lever (2) the position sensor (5c) for the second toggle switch (3b) is triggered.

11. Control device according to one of the preceding Claims 7 to 10, **characterized in that** the second permanent magnet (9) is constructed or arranged in such a way that in the forward (D) position of the selector lever (2) no position sensor (5) is triggered.

12. Control device according to one of the preceding claims, **characterized in that** a paddle circuit (12) is provided and the paddle circuit (12) is activated only in the position (M) for manual shifting.

13. Control device according to one of the preceding claims, **characterized in that** the control device (1) is embodied in such a way that when a toggle switch (3a, 3b) is activated, an earth potential is connected to the input of the control unit (7).

14. Control device according to one of the preceding claims, **characterized in that** the signals of the different switch positions are evaluated by the electronic gearbox control unit (7).

15. Control device according to one of the preceding claims, **characterized in that** the diagnostics are carried out using the control unit (7) via the control lines (6), namely a 3-conductor wire, which is present for the position sensors (5).

16. Control device according to Claim 6 and 7 and, if appropriate, according to one of the preceding Claims 8 to 15, **characterized in that** the first and second permanent magnets (8, 9) are arranged in a type of Z shape with respect to one another.

17. Control device according to Claim 6 and 7 and, if appropriate, according to one of the preceding Claims 8 to 16, **characterized in that** the first and second permanent magnets (8, 9) are embodied as a physical unit (13) with the result that the physical unit (13) has a check magnet part (13a) and a switching magnet part (13b).

18. Control device according to Claim 6 and 7 and, if appropriate, according to one of the preceding Claims 8 to 17, **characterized in that** the first and second permanent magnets (8, 9) are connected mechanically.

19. Control device according to Claim 6 and 7 and, if appropriate, according to one of the preceding Claims 8 to 18, **characterized in that** the first and second permanent magnets (8, 9) or the check magnet part (13a) and the switching magnet part (13b) are arranged in a type of T shape with respect to one another,

20. Control device according to one of the preceding claims, **characterized in that** the physical unit (13) is arranged on the selector lever (2) or on a shift cover (10).

21. Control device according to one of the preceding claims, **characterized in that** the fault message triggers an audible and/or visual warning signal.

22. Control device according to one of the preceding claims, **characterized in that** the position sensors (5) are embodied as cam switches, optical sensors or other electrical or magnetic sensors.

## Revendications

1. Unité de commande (1) pour une boîte de vitesses pouvant être utilisée de manière automatique et manuelle installée dans un véhicule automobile, munie d'un levier de sélection (2) pour régler au moins les positions marche avant (D), neutre (N), marche arrière (R), parking (P) et une position (M) pour les changements de vitesse manuels, un premier et un deuxième commutateurs à impulsion (3a, 3b) pouvant être actionnés dans la position (M) pour les changements de vitesse manuels, des signaux correspondants de passage au rapport supérieur ou inférieur des dispositifs de démultiplication de l'engrenage étant délivrés à un appareil de commande (7) par le biais de capteurs de position (5) et de lignes de commande (6) pour commander l'engrenage et une panne des capteurs de position (5) et/ou des lignes de commande (6) associées aux capteurs de position (5) pouvant être déterminée, **caractérisée en ce que** l'unité de commande (1) est configurée de telle manière au niveau de la technique de circuit, qu'au moins dans la position parking (P) ou marche arrière (R) du levier de sélection (2) au moins l'un des capteurs de position (5) déclenchés peut être contrôlé par un déclenchement d'au moins l'un des capteurs de position (5) et la panne d'un capteur de position (5) et/ou d'une ligne de commande (6) peut être déterminée et qu'un message d'erreur est émis en cas de détermination de la panne d'un capteur de position (5) et/ou d'une ligne de commande (6).

2. Unité de commande (1) pour une boîte de vitesses pouvant être utilisée de manière automatique et manuelle installée dans un véhicule automobile, munie d'un levier de sélection (2) pour régler au moins les positions marche avant (D), neutre (N), marche arrière (R), parking (P) et une position (M) pour les changements de vitesse manuels, un premier et un deuxième commutateurs à impulsion (3a, 3b) pouvant être actionnés dans la position (M) pour les changements de vitesse manuels, des signaux correspondants de passage au rapport supérieur ou inférieur des dispositifs de démultiplication de l'engrenage étant délivrés à un appareil de commande (7) par le biais de capteurs de position (5) et de lignes de commande (6) pour commander l'engrenage et une panne des capteurs de position (5) et/ou des lignes de commande (6) associées aux capteurs de position (5) pouvant être déterminée, **caractérisée en ce que** l'unité de commande (1) est configurée de telle manière au niveau de la technique de circuit, que dans la position marche avant (D) du levier de sélection (2) au moins l'un des capteurs de position (5) déclenchés peut être contrôlé par un déclenchement d'au moins l'un des capteurs de position (5) et la panne d'un capteur de position (5) et/ou d'une ligne de commande (6) peut être déterminée et qu'un message d'erreur est émis en cas de détermination de la panne d'un capteur de position (5) et/ou d'une ligne de commande (6).

3. Unité de commande selon la revendication 1 ou 2, **caractérisée en ce que** tous les capteurs de position (5) peuvent être contrôlés par un déclenchement des capteurs de position (5).

4. Unité de commande selon l'une des revendications précédentes, **caractérisée en ce qu'**un message d'erreur est émis en cas de détection d'un court-circuit vers la . masse ou d'un court-circuit vers le « + ».

5. Unité de commande selon l'une des revendications précédentes, **caractérisée en ce que** les capteurs de position (5) pour la position (M) des changements de vitesse manuels et les capteurs de position (5) pour les commutateurs à impulsions (3a ou 3b) sont constitués de capteurs à effet Hall.

6. Unité de commande selon l'une des revendications précédentes, **caractérisée en ce qu'**un premier aimant permanent (8) faisant office de premier élément de déclenchement pour les capteurs de position (5) est associé au levier de sélection (2) et peut être déplacé en même temps que le levier de sélection (2).

7. Unité de commande selon l'une des revendications précédentes, **caractérisée en ce qu'**un deuxième aimant permanent (9) faisant office de deuxième élément de déclenchement pour les capteurs de position (5) est prévu et le deuxième aimant permanent (9) est disposé sur un obturateur qui recouvre la zone de basculement du levier de sélection.

8. Unité de commande selon la revendication 7, **caractérisée en ce que** le deuxième aimant permanent (9) est configuré ou disposé de telle manière que tous les capteurs de position (5) sont déclenchés lorsque le levier de sélection se trouve en position parking (P).

9. Unité de commande selon l'une des revendications précédentes 7 ou 8, **caractérisée en ce que** le deuxième aimant permanent (9) est configuré ou disposé de telle manière que les capteurs de position (5b ou 5c) pour la position (M) et pour le deuxième commutateur à impulsion (3b) sont déclenchés lorsque le levier de sélection (2) se trouve en position marche arrière (R).

10. Unité de commande selon l'une des revendications précédentes 7 à 9, **caractérisée en ce que** le deuxième aimant permanent (9) est configuré ou disposé de telle manière que le capteur de position (5c) pour le deuxième commutateur à impulsion (3b) est déclenché lorsque le levier de sélection (2) se trouve en position neutre (N).

11. Unité de commande selon l'une des revendications précédentes 7 à 10, **caractérisée en ce que** le deuxième aimant permanent (9) est configuré ou disposé de telle manière qu'aucun capteur de position (5) n'est déclenché lorsque le levier de sélection (2) se trouve en position marche avant (D).

12. Unité de commande selon l'une des revendications précédentes, **caractérisée en ce qu'**il est prévu une commutation à palettes (12) et la commutation à palettes (12) n'est active qu'en position (M) pour les changements de vitesse manuels.

13. Unité de commande selon l'une des revendications précédentes, **caractérisée en ce que** l'unité de commande (1) est réalisée de telle manière que lors de l'actionnement d'un commutateur à impulsion (3a, 3b), un potentiel de masse est appliqué à l'entrée de l'appareil de commande (7).

14. Unité de commande selon l'une des revendications précédentes, **caractérisée en ce que** les signaux des différentes positions du commutateur sont interprétés par l'appareil électronique de commande de l'engrenage (7).

15. Unité de commande selon l'une des revendications précédentes, **caractérisée en ce que** le diagnostic est réalisé à l'aide de l'appareil de commande (7) par le biais des lignes de commande (6) existantes pour les capteurs de position (5), à savoir par le biais d'un câble à 3 conducteurs.

16. Unité de commande selon les revendications 6 et 7 et éventuellement selon l'une des revendications précédentes 8 à 15, **caractérisée en ce que** le premier et le deuxième aimants permanents (8, 9) sont disposés l'un par rapport à l'autre selon une espèce de forme en Z.

17. Unité de commande selon les revendications 6 et 7 et éventuellement selon l'une des revendications précédentes 8 à 16, **caractérisée en ce que** le premier et le deuxième aimants permanents (8, 9) sont réalisés sous la forme d'un composant unique (13) de manière à ce que le composant unique (13) présente une partie aimant de contrôle (13a) et une partie aimant de commutation (13b).

18. Unité de commande selon les revendications 6 et 7 et éventuellement selon l'une des revendications précédentes 8 à 17, **caractérisée en ce que** le premier et le deuxième aimants permanents (8, 9) sont reliés mécaniquement.

19. Unité de commande selon les revendications 6 et 7 et éventuellement selon l'une des revendications précédentes 8 à 18, **caractérisée en ce que** le premier et le deuxième aimants permanents (8, 9) ou la partie aimant de contrôle (13a) et la partie aimant de commutation (13b) sont disposés l'un par rapport à l'autre selon une espèce de forme en T.

20. Unité de commande selon l'une des revendications précédentes, **caractérisée en ce que** le composant unique (13) est disposé sur le levier de sélection (2) ou sur un couvercle de commutateur (10).

21. Unité de commande selon l'une des revendications précédentes, **caractérisée en ce que** le message d'erreur déclenche un signal d'alerte sonore et/ou visuel.

22. Unité de commande selon l'une des revendications précédentes, **caractérisée en ce que** les capteurs de position (5) sont réalisés sous la forme de commutateurs à cames, de détecteurs optiques ou d'autres types de détecteurs électriques ou magnétiques.
